# EUROPÄISCHE PATENTSCHRIFT

(11) **EP 1 530 685 B1**
(45) Veröffentlichungstag und Bekanntmachung des Hinweises auf die Patenterteilung: **27.09.2006**
(21) Anmeldenummer: 03792295.2
(22) Anmeldetag: 11.08.2003
(51) Int. Cl.: F16D 1/06, B21B 35/14, F16D 3/06

(54) **ANSCHLUSSELEMENT ZUR VERBINDUNG VON GELENKSPINDELN MIT ANSCHLUSSAGGREGATEN, INSBESONDERE TREFFERHALTERUNG MIT KONISCHER ZENTRIERUNG**
CONNECTING ELEMENT FOR CONNECTING ARTICULATED SPINDLES TO CONNECTION ASSEMBLIES, PARTICULARLY A COUPLING HOLDING DEVICE WITH CONICAL CENTERING
ELEMENT DE RACCORDEMENT POUR RELIER DES BROCHES ARTICULEES A DES UNITES DE RACCORDEMENT, NOTAMMENT FIXATION D'ASSEMBLAGE A CENTRAGE CONIQUE

(30) Priorität: 23.08.2002 DE 20213190 U
(43) Veröffentlichungstag der Anmeldung: 18.05.2005
(73) Patentinhaber: Voith Turbo GmbH & Co. KG, 89522 Heidenheim (DE)
(72) Erfinder: GRAWENHOF, Peter, 89547 Gerstetten/Dettingen (DE); WEGMANN, Holger, 89522 Heidenheim/Oggenhausen (DE)
(74) Vertreter: Dr. Weitzel & Partner
(86) Internationale Anmeldenummer: PCT/EP2003/008911
(87) Internationale Veröffentlichungsnummer: WO 2004/018887

(56) Entgegenhaltungen:
- DD-B- 279 424
- US-A- 4 094 179
- US-A- 6 082 924

## Beschreibung

Die Erfindung betrifft ein Anschlusselement, welches eine Gelenkspindel mit einem Anschlussaggregaten verbindet, bevorzugt eine Treffer-Flachzapfenverbindung.

Insbesondere bei Walzwerksantrieben erfolgt der Anschluss von Gelenkspindeln (Gelenkwellen, Flachzapfenspindeln, Zahnkupplungen usw.) über sogenannte "Treffer". Diese sind gekennzeichnet durch eine Nabe, welche vornehmlich einen Flachzapfenanschluss besitzt und somit ein rasches Wechseln der Verbindungseinheit und Lösen der Verbindung ermöglicht. Um eine genauere Zentrierung der Verbindung zu gewährleisten, werden üblicherweise zwei Zentrierdurchmesser am Anfang und am Ende des als Flachzapfenteil ausgeführten Anschlusselements angebracht, weiche gewöhnlich in Form von Zentrier- bzw. Verschleißringen vorliegen. Die heute bekannten Zentrierungen basieren alle auf zylindrischen Durchmessern. Nachteil dieser Ausführung ist, dass insbesondere bei verschlissenen Zentrierungen Spiel auftritt, welches zum Unrundlauf von Treffer und Gelenkspindel führt und somit zusätzlichen verstärkten Verschleiß hervorruft. Für Vorrichtungen zum Zentrieren wird beispielhaft auf die US 4 094 179 verwiesen.

Der Erfindung lag daher die Aufgabe zugrunde, die Nachteile des Standes der Technik zu überwinden, insbesondere (die Vorraussetzungen für) eine wenig verschleißanfällige Verbindung zu schaffen

Die Aufgabe wird gelöst durch die Merkmale des Anspruches 1.

Bevorzugte Ausgestaltungen sind Gegenstand der Unteransprüche.

Ein Anschlusselement, welches Gelenkspindeln mit Anschlussaggregaten verbindet, vorzugsweise ein Treffer-Flachzapfenanschluss ist dadurch charakterisiert, dass in diesen die drehmomentübertragende Verbindung, insbesondere Profilverbindung zentriert wird. Das Anschlusselement ist derart gestaltet, dass dieses einen Innenraum aufweist, in welchem die Profilverbindung realisiert wird, insbesondere der die Profilverbindung umschließt. Dabei handelt es sich im einzelnen um die Verbindung von Gelenkspindeln, die beispielsweise in Form von Gelenkwellen, Flachzapfenspindeln oder Zahnkupplungen vorliegen, und Anschlussaggregaten über das als Nabe ausgebildete Anschlusselement.

Die erfindungsgemäße Lösung ermöglicht eine einfache und rationelle Fügbarkeit der Anschlusselemente, insbesondere der Nabe und der Gelenkspindel, welche als Welle vorliegt.

Erforderlich ist mindestens eine konische Zentrierstelle, vorzugsweise werden jedoch zwei Zentrierstellen mit konischem Sitz gestaltet. Der Konus ist dabei derart ausgeführt, dass dieser in Einbaulage betrachtet in Richtung der wirkenden Axialkräfte ausgeführt ist, dass heißt in Richtung des anzukoppelnden Elementes, insbesondere die Gelenkspindel verjüngend ausgeführt ist.

Die Zentrierstellen können dabei in unterschiedlichen Bereichen am Anschlusselement über dessen axiale Erstreckung angeordnet werden. Vorzugsweise sind diese jeweils im Bereich der Enden des Anschlusselementes angeordnet. Für eine besondere Ausgestaltung wird zur Reduzierung der Länge des Anschlusselementes die der Gelenkspindel, insbesondere dem Anschlussaggregat zugewandte Seite in das Innere des Anschlusselementes verlagert. Damit können besonderes kurze Anschlusselemente realisiert werden.

Eine besonders vorteilhafte Ausführung besteht in Ausgestaltung mit zwei konischen Zentrierstellen. Eine Überbestimmtheit des Systems wird dadurch vermieden, dass dann nur eine Zentrierstelle als ortsfeste Zentrierung in radialer und axialer Richtung ausgebildet wird. Die zweite Zentrierstelle ist in axialer Richtung bewegbar gelagert bzw. geführt. Diese kann beispielsweise von einem axial bewegbaren Ring, der durch eine Kraft, beispielsweise eine Federkraft oder ein Druckmittel auf den Konus geschoben und gehalten wird, gebildet werden.

Dies bietet den Vorteil, dass das erforderliche radiale Spiel zur Zentrierung des Ringes bei einer konventionellen zylindrischen Lagerstelle entfällt.

Die Zentrierstelle, das heißt insbesondere der Konus einer ortsfesten Zentrierstelle kann dabei einteilig mit dem Anschlusselement, das heißt als integrale Baueinheit mit diesem ausgeführt sein, oder aber ist mit dem Anschlusselement drehfest verbunden. Vorzugsweise werden die, die Zentrierstelle tragenden Elemente jedoch als separate Elemente ausgeführt, die lösbar mit dem Anschlusselement verbindbar sind, so dass in Abhängigkeit des konkreten Einsatzfalles eine einfache Austauschbarkeit gegeben ist. Ferner sind diese Elemente im Verschleißfall einfacher austauschbar und die Nabe des Anschlusselementes kann aus einem anderen Material als die die Zentrierstellen tragenden Elemente gefertigt werden. Damit können die einzelnen Bauteile entsprechend der konkreten Belastungen ausgelegt werden, und die Verschleiß-Paarungen den entsprechenden Anforderungen, angepasst werden. Diese Lösung ist damit aus ökonomischer Sicht besonders sinnvoll.

Die lösbare Verbindung zwischen den die Zentrierstellen tragenden Elementen und der Nabe des Anschlusselementes wird dabei im einfachsten Fall mittels Befestigungselementen, vorzugsweise in Form von Schraubverbindungen realisiert.

Bezüglich der drehmomentübertragenden Profilverbindung zwischen der Nabe des Anschlusselementes und dem Anschlussaggregat, das heißt der Gelenkspindel bestehen keinerlei Beschränkungen. Diese kann als Passfederverbindung, Flachzapfen, Kleeblatt oder Keilwellenverbindung ausgeführt sein. Entscheidend ist lediglich, dass die Verbindung konisch zentriert ist.

Um die Vorteile des erfindungsgemäßen Anschlusselementes, welches eine Nabe zur Realisierung einer drehmomentübertragenden Profilverbindung mit einem Anschlussaggregat umfasst und wenigstens zwei Zentrierstellen zur Zentrierung der drehmomentübertragenden Verbindung aufweist, zu nutzen, ist es insbesondere bei Ausführungen des Anschlussaggregates als Gelenkspindel erforderlich, dass eine axiale Kraft die Nabe auf das wellenartig ausgestaltete Gegenstück, z. B. den Flachzapfen drückt. Die Haltekraft muss dabei größer gewählt werden wie die entgegengerichteten Kraftkomponenten, welche z. B. als Rückstellkraft hervorgerufen durch auf den Konus wirkende Querkräfte, wie beispielsweise Gewichtskräfte, Biegekräfte usw., verursacht werden. Eine solche Kraft kann insbesondere durch ein federvorgespanntes Mittelteil bei Gelenkwellen, wobei dieses Mittelteil zwischen zwei Kreuzgelenkanordnungen angeordnet ist, oder eine mit Axialkraft beaufschlagte Lagerstelle, aufgebracht werden. Ist diese Forderung erfüllt, kann an den konischen Sitzen eine spielfreie Zentrierung realisiert werden.

Die Erfindung soll nachfolgend anhand der Figuren beispielhaft beschrieben werden:

Es zeigen:
- **Figur 1**: verdeutlicht eine versetzte Anordnung zweier Gelenkwellen, die über jeweils ein erfindungemäß gestaltetes Anschlusselement mit den anzutreibenden Walzen in einem Walzwerksantrieb verbunden sind;
- **Figur 2**: verdeutlicht die Ausführung der der Gelenkspindel abgewandte Seite als Fix-Zentrierung, wobei die gegenüberliegende Zentrierstelle beweglich gestaltet ist;
- **Figur 3**: verdeutlicht die Ausführung der der Gelenkspindel zugewandten Zentrierstelle als Fix-Zentrierung, wobei die davon abgewandte Zentrierstelle, insbesondere das die Zentrierstelle tragende Element beweglich ausgeführt ist;
- **Figur 4**: zeigt eine Ausführung, bei der die der Gelenkspindel zugewandte Seite des Anschlusselementes zur Reduzierung des Trefferlänge ins Innere des Zapfens verlagert ist;
- **Figur 5**: verdeutlicht eine Ausführung, bei der nur eine Zentrierstelle konisch gestaltet ist, wobei die gegenüberliegende Seite zylindrisch konzipiert ist.
- **Figure 6**: zeigt eine Ausgestaltung der Zentrierstelle.

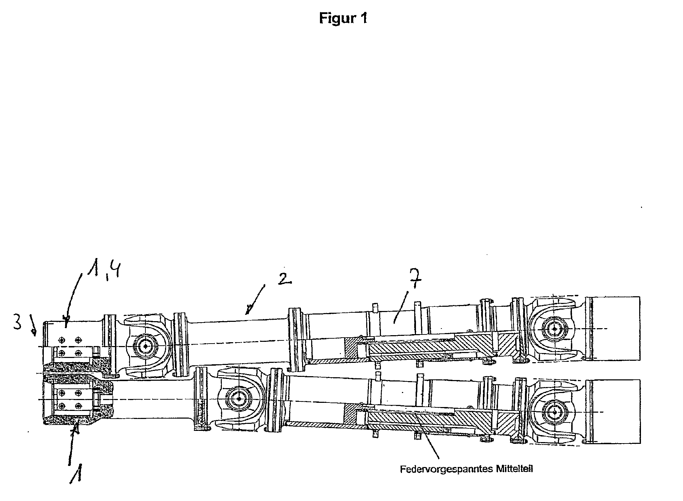

Die vorliegende Erfindung bezieht sich auf ein Anschlusselement 1, welches Gelenkspindeln 2 mit Anschlussaggregaten 3 verbindet, bevorzugt eine "Treffer-Flachzapfenverbindung" 4. Hier soll speziell eine Ausführung geschützt werden, bei welcher eine dreh-momentübertragende Profilverbindung (Passfeder, Flachzapfen, Kleeblatt, Keilwelle) zwischen Anschlusselement 1 und Anschlussaggregat 3 konisch zentriert wird. Das Anschlusselement 1 umfasst dazu wenigstens zwei Zentrierstellen 5 und 6, die von Zentrierflächen gebildet werden. Dabei ist wenigstens eine Zentrierstelle 5 oder 6, besser jedoch beide Zentrierstellen 5 und 6 mit konischem Sitz gestaltet. Dies ist für das Anschlusselement in Bild 2 gezeigt. Diese Ausführung setzt voraus, dass eine axiale Kraft die Nabe (z. B. Treffer) auf das wellenartig gestaltete Gegenstück (z. B. Flachzapfen) drückt. Die Haltekraft muss dabei größer gewählt werden wie die entgegengerichteten Kraftkomponenten, welche z. B. als Rückstellkraft, hervorgerufen durch auf den Konus wirkende Querkräfte (Gewichtskräfte, Biegekräfte usw.), verursacht wird. Eine solche Kraft kann insbesondere durch ein federvorgespanntes Mittelteil 7 wie in Bild 1 gezeigt oder eine mit Axialkraft beaufschlagte Lagerstützstelle aufgebracht werden. Ist diese Forderung erfüllt, so kann an den konischen Sitzen eine spielfreie Zentrierung realisiert werden. Diese Forderung erhält um so größere Dringlichkeit, wenn die Gelenkmittelpunkte einen großen Abstand zur Profilverbindung besitzen, wie dies z. B. bei einer versetzten Anordnung (gemäß Figur 1 für die untere Wellen) der Fall ist. Ferner führt die konische Zentrierung zu einer deutlich vereinfachten, rationelleren Fügbarkeit von Welle und Nabe.

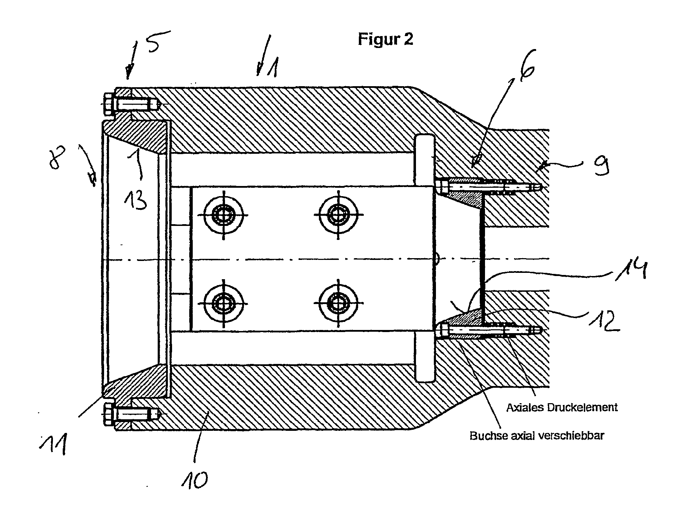

Die bevorzugte Variante bezieht sich auf eine Ausführung eines Anschlusselementes 1 mit zwei konischen Zentrierstellen 5 und 6 wie in Figur 2 gezeigt. Diese sind vorzugsweise in den Endbereichen 8 und 9 des Anschlusselementes 1 angeordnet. Das Anschlusselement 1 umfasst eine Nabe 10. Die Zentrierstellen 5 und 6 sind entweder in der Nabe 10 direkt integriert, das heißt als einteilige Baueinheit mit dieser ausgeführt oder aber werden wie in Figur 2 dargestellt, von Zentrierstellen tragenden Elementen 11 und 12 gebildet. Diese stützen sich in der Nabe 10 ab und sind mit dieser drehfest verbunden. Die Zentrierstellen tragenden Elemente 11 und 12 sind dabei über wenigstens einen Teilbereich an deren Innenumfang 13 bzw. 14 konisch gestaltet. Der Konus ist daher an beiden Zentrierstellen hinsichtlich der Richtung gleich ausgerichtet. Eine Überbestimmtheit des Systems wird dadurch vermieden, dass nur eine Zentrierstelle 5 oder 6, hier 5 als Fix-Zentrierung, das heißt in radialer und axialer Richtung feste Zentrierung ausgebildet wird. Die zweite Zentrierstelle 6 wird von einem axial beweglichen Ring 15 bzw. einer Buchse gebildet welche z. B. durch Federkraft, hier über ein axiales Druckelement 16 oder Hydraulik-Druck auf den Konus geschoben und gehalten wird. Das erforderliche radiale Spiel zur Zentrierung dieses Ringes 15 bzw. der Buchse kann dabei gegenüber einer konventionellen zylindrischen Lagerstelle entfallen.

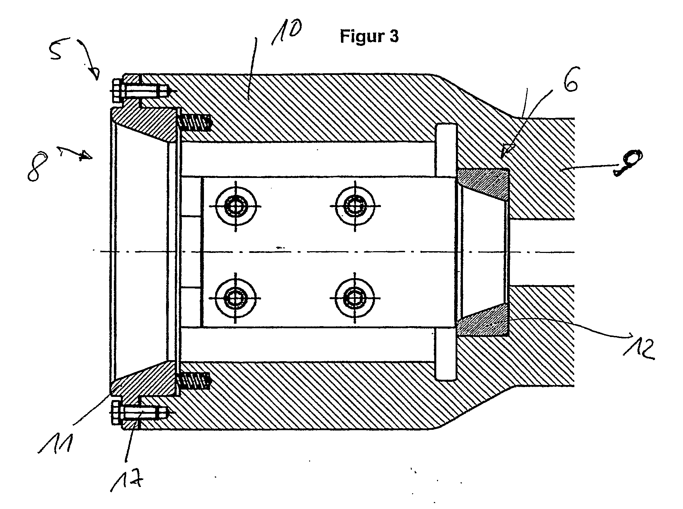

In den Figuren 3 bis 5 sind weitere Ausführungsbeispiele der Erfindung gezeigt.

Bei der Ausführungsform gemäß Figur 3 ist die der Gelenkspindel 2 zugewandte Seite ist als Fix-Zentrierung gestaltet, das heißt die zweite Zentrierstelle 6 im Endbereich 9, der zur Gelenkspindel 2 weist. Die abgewandte Seite, das heißt die Zentrierstelle 5 ist beweglich ausgeführt.

Auch bei dieser Ausführung werden beide Zentrierstellen 5 und 6 von Zentrierstellen tragenden Elementen 11 und 12 gebildet. Diese sind als ringförmige, insbesondere zylindrische Elemente mit Innenkonus ausgeführt. Die Zentrierstelle 5, insbesondere das die Zentrierstelle 5 tragende Element 11 ist drehfest, jedoch in axialer Richtung verschiebbar in der Nabe 10 angeordnet. Die Befestigung erfolgt lösbar, beispielsweise wie hier dargestellt über Befestigungselemente 17 in Form von Schrauben. In axialer Richtung stützt sich das Element 11 gegenüber der Nabe 10 verschiebbar ab.

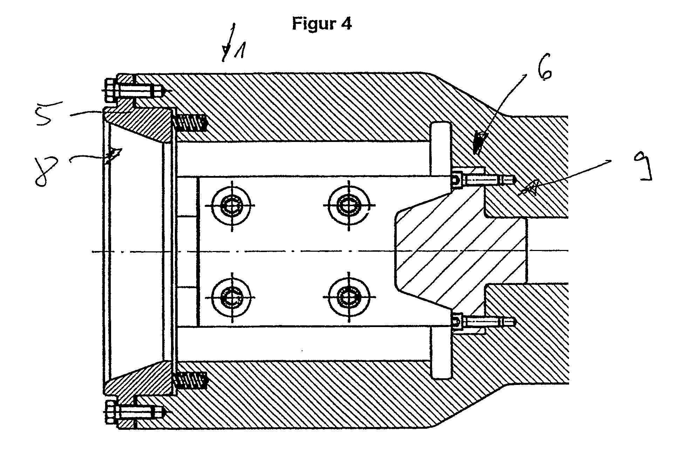

Bei der Ausführungsform gemäß Figur 4 ist die der Gelenkspindel zugewandte Seite zur Reduzierung der Länge des Anschlusselementes1, insbesondere der Trefferlänge ins Innere des Zapfens verlagert.

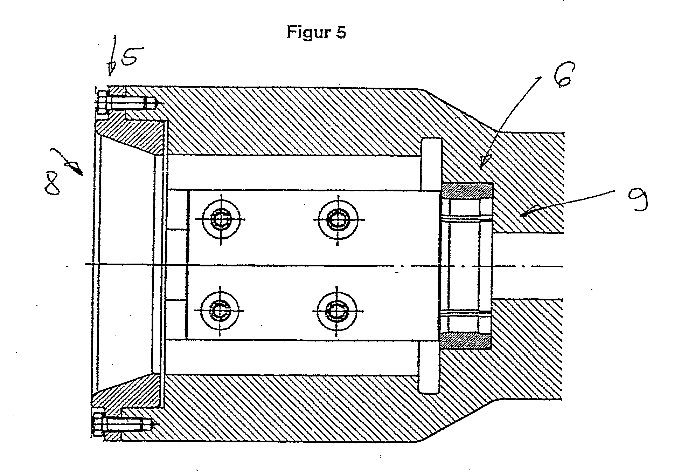

Figur 5 zeigt eine Ausführung, bei der nur die Zentrierstelle 5 am Endbereich 8 konisch gestaltet ist. Die gegenüberliegende Seite, insbesondere die Zentrierstelle 6 ist zylindrisch konzipiert.

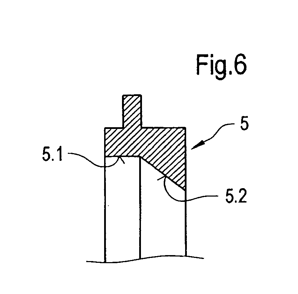

Figur 6 verdeutlicht eine mögliche Ausgestaltung einer Zentrierstelle 5 oder 6, wie sie in dem in den Figuren beschriebenen Ausführungen ebenfalls zum Einsatz gelangen kann. Bei dieser setzt sich die Zentrierstelle, hier beispielhaft 5, aus einer Mehrzahl, vorzugsweise wenigstens zwei Teilzentrierflächen 5.1, 5.2 zusammen. Dabei ist dem Konus an der Zentrierfläche 5.2 eine zylindrische Fläche 5.1 vorgeschaltet. Entscheidend ist lediglich, dass in Richtung zur Gelenkspindel der Durchmesser sich verjüngt.

### Bezugszeichenliste

- 1: Anschlusselement
- 2: Gelenkspindel
- 3: Anschlussaggregat
- 4: Treffer-Flachzapfenverbindung
- 5: Zentrierstelle
- 5.1: Teilzentrierfläche
- 5.2: Teilzentrierfläche
- 6: Zentrierstelle
- 7: Mittelteil
- 8: Endbereich
- 9: Endbereich
- 10: Nabe
- 11: Zentrierstellen tragendes Element
- 12: Zentrierstellen tragendes Element
- 13: Innenumfang
- 14: Innenumfang
- 15: Ring, Buchse
- 16: Druckelement
- 17: Befestigungselement

## Patentansprüche

1. Anschlusselement (1) zur Verbindung von Gelenkspindeln (2) mit Anschlussaggregaten (3), insbesondere Treffer-Flachzapfenverbindung, mit folgenden Merkmalen:
- die drehmomentübertragende Profilverbindung ist konisch zentriert es sind wenigstens zwei Zentrierstellen (5, 6) vorgesehen, wobei wenigstens eine, vorzugsweise beide konisch ausgestaltet sind;
- das Anschlusselement (1) umfasst eine Nabe (10) und die Zentrierstellen (5, 6) sind am Innenumfang der Nabe (10) des Anschlusselementes (1) eingearbeitet oder an Zentrierstellen tragenden Elementen (11, 12) angeordnet, die lösbar mit der Nabe (10) verbindbar sind; wobei ein Zentrierstellen (5, 6) tragendes Element (11, 12) drehfest mit der Nabe (10) jedoch in axialer Richtung verschiebbar verbunden ist und zwischen dem Zentrierstellen tragenden Element (11, 12) und der Nabe (10) in axialer Richtung ein Druckelement (16), insbesondere Federelement oder anderes elastisches Element angeordnet ist.

2. Anschlusselement (1) nach Anspruch 1, **dadurch gekennzeichnet dass** die Zentrierung jeweils im Bereich der Enden (8, 9) am Anschlusselement (1) erfolgt.

3. Anschlusselement (1) nach einem der Ansprüche 1 oder 2, **dadurch gekennzeichnet, dass** die einzelne Zentrierstelle (5, 6) aus wenigstens zwei Zentrierflächen (5.1, 5.2) gebildet wird, wobei eine erste zylindrisch oder in einer anderen Form ausgeführt ist und die zweite Zentrierteilfläche (5.2) konisch gestaltet ist.

4. Anschlusselement (1) nach einem der Ansprüche 1 bis 3, **dadurch gekennzeichnet, dass** die lösbare Verbindung Schraubverbindungen umfasst.

5. Anschlusselement (1) nach einer der Ansprüche 1 bis 4, **dadurch gekennzeichnet, dass** ein Zentrierstelle tragendes Element (11, 12) ortsfest in radialer und axialer Richtung an der Nabe (10) befestigt ist.

6. Anschlusselement (1) nach einem der Ansprüche 1 bis 5, **dadurch gekennzeichnet, dass** das Anschlusselement (1) einen Innenraum aufweist, der die drehmomentübertragende Profilverbindung der miteinander zu verbindenden Elemente, Anschlussaggregat (3) und Gelenkspindel (2) umschließt.

7. Verfahren zur Herstellung einer Verbindung zwischen einer Gelenkspindel (2) und einem Anschlussaggregat (3), insbesondere Walze, **dadurch gekennzeichnet, dass** diese über ein Anschlusselement (1) gemäß einem der Ansprüche 1 bis 6 realisiert wird.

## Claims

1. A connecting element (1) for connecting articulated spindles (2) with connecting units (3), especially flat-pin coupling joints, with the following features:
- the torque-transmitting profile connection is conically centered;
- at least two centering points (5, 6) are provided, with at least one and preferably both being provided with a conical configuration,
- the connecting element (1) comprises a hub (10) and the centering points (5, 6) are incorporated in the inner circumference of the hub (10) of the connecting element (1) or are arranged on elements (11, 12) which carry centering points and can be detachably connected with the hub (10), with an element (11, 12) carrying a centering point (5, 6) being torsionally rigidly connected with the hub (10), but being displaceable in the axial direction, and with a pressure element (16), especially a spring element or another elastic element, being arranged between the element (11, 12) carrying the centering point and the hub (10).

2. A connecting element (1) according to claim 1, **characterized in that** the centering occurs each in the region of the ends (8, 9) on the connecting element (1).

3. A connecting element (1) according to one of the claims 1 or 2, **characterized in that** the individual centering points (5, 6) are formed by at least two centering surfaces (5.1, 5.2), with a first one being configured in a cylindrical or other shape and the second partial centering surface (5.2) being provided with a conical configuration.

4. A connecting element (1) according to one of the claims 1 to 3, **characterized in that** the detachable connection comprises screwed joints.

5. A connecting element (1) according to one of the claims 1 to 4, **characterized in that** an element (11, 12) carrying a centring point is fastened to the hub (10) in a stationary manner in the radial and axial direction.

6. A connecting element (1) according to one of the claims 1 to 5, **characterized in that** the connecting element (1) comprises an inner space which encloses the torque-transmitting profile connection of the elements', connecting unit (3) and articulated spindle (2) to be joined with each other.

7. A method for producing a connection between an articulated spindle (2) and a connecting unit (3), especially a roller, **characterized in that** the same is realized by way of a connecting element (1) according to one of the claims 1 to 6.

## Revendications

1. Elément de raccordement (1) pour la liaison de broches articulées (2) avec des unités de raccordement (3), en particulier, liaisons à tourillons plats, dites de « Rencontre » (TREFFER) présentant les particularités suivantes :
- l'organe de liaison transmetteur de couple de rotation, comporte un centrage conique,
- il est prévu au moins deux zones de centrage (5,6) dont l'une au moins, et de préférence les deux, présentent une configuration conique,
- l'élément de raccordement (1) comporte un moyeu (10) et les zones de centrage sont usinées à la périphérie interne du moyeu (10) de l'élément (1) ou bien elles sont disposées sur des éléments porteurs (11,12) dans les zones de centrage,
- un élément (11,12) porteur de zones de centrage (5,6) étant solidarisé en rotation avec le moyeu (10) tout en restant coulissant en direction axiale, et
- un élément de pression (16), ressort en particulier ou tout autre élément élastique, étant disposé axialement entre l'élément porteur de zones de centrage (11,12) et le moyeu.

2. Elément de raccordement (1) selon la revendication 1, **caractérisé en ce que** le centrage a lieu dans tous les cas, dans la zone des extrémités (8,9) de l'élément de raccordement.

3. Elément de raccordement (1) selon la revendication 1 ou 2, **caractérisé en ce que** les zones de centrage (5,6) sont formées par au moins deux surfaces de centrage (5.1, 5.2) dont une première présente une formation cylindrique ou autre, tandis que l'autre (5.2) est de forme conique.

4. Elément de raccordement (1) selon la revendication 1 ou 3, **caractérisé en ce que** la liaison libérable comporte des liaisons à vis.

5. Elément de raccordement (1) selon une des revendications 1 à 4, **caractérisé en ce qu'**un élément (11,12) porteur de zone de centrage est fixé rigidement en directions radiale et axiale au moyeu.

6. Elément de raccordement (1) selon l'une des revendications 1 à 5, **caractérisé en ce que** l'élément de raccordement (1) comporte un espace intérieur qui entoure l'organe de liaison transmetteur de couple de rotation entre éléments à raccorder, l'unité de raccordement (3) et la broche articulée (2).

7. Procédé de construction d'une liaison entre une broche articulée (2) et une unité de raccordement (3) **caractérisé en ce que** celle-ci est réalisée selon une des revendications 1 à 6.
